# EUROPÄISCHE PATENTSCHRIFT

(11) **EP 1 839 792 B1**
(45) Veröffentlichungstag und Bekanntmachung des Hinweises auf die Patenterteilung: **08.09.2010**
(21) Anmeldenummer: 07006127.0
(22) Anmeldetag: 24.03.2007
(51) Int. Cl.: B23D 61/04, B23D 61/14

(54) **Sägeblatt mit einem Grundkörper und Zähnen mit Schneiden**
Saw blade with a carrier and teeth with cutting edges
Lame de scie dotée d'un corps de base et de dents ayant une lame de coupe

(30) Priorität: 01.04.2006 DE 102006015278
(43) Veröffentlichungstag der Anmeldung: 03.10.2007
(73) Patentinhaber: WIKUS-Sägenfabrik Wilhelm H. Kullmann GmbH & Co. KG., 34286 Spangenberg (DE)
(72) Erfinder: Kullmann, Jörg, Dr., 34286 Spangenberg (DE); Gross, Klaus, 76676 Graben-Neudorf (DE)
(74) Vertreter: Rehberg Hüppe + Partner

(56) Entgegenhaltungen:
- EP-A- 1 205 274
- JP-A- 1 135 413
- US-A- 820 969
- US-A- 3 730 038

## Beschreibung

### TECHNISCHES GEBIET DER ERFINDUNG

Die Erfindung betrifft ein Sägeblatt mit einem Grundkörper und Zähnen mit Schneiden. Der Grundkörper besitzt Vorsprünge, die im Abstand der zu bildenden Zähne angeordnet sind. Jeder Vorsprung besitzt eine Fügefläche, die in der Regel von einer taschenartigen Ausnehmung am Vorsprung gebildet wird. In diese Vorsprünge werden Einsätze aus vergleichsweise härterem Material, als es dem Material des Grundkörpers entspricht, eingesetzt. Die Einsätze können aus Hartmetall bestehen. Jeder Einsatz bildet so gesehen einen Zahn und weist eine Schneide und eine an die Schneide anschließende Spanfläche auf, mit der der von dem Werkstück abgelöste Span zumindest teilweise in Kontakt kommt. Die Erfindung lässt sich insbesondere an Kreissägeblättern anwenden, insbesondere an so genannten Dünnschnittkreissägeblättern, die ohne vorgesehenen Nachschärfvorgang als Einmalwerkzeuge benutzt werden und deren bevorzugtes Einsatzgebiet das Schneiden bzw. Ablängen von vergleichsweise kurzen Werkstücken, insbesondere von Profilen, aber auch von Vollmaterialien ist. Die Erfindung lässt sich aber auch an einem gestreckten Sägeblatt, also an einem Sägeband, einsetzen.

### STAND DER TECHNIK

Sägeblätter der hier angesprochenen Art sind aus der US 4,011,783 für ein Kreissägeblatt und aus der EP 0 266 022 für ein Sägeblatt in Form eines Sägebands bekannt. In beiden Fällen werden die Zähne von Einsätzen oder Einsatzkörpern gebildet, die in Vorsprünge, die aus dem Material des Grundkörpers des Sägeblatts ausgebildet sind, eingesetzt werden. Hierzu weisen die Vorsprünge Ausnehmungen oder Taschen auf, die durch eine Fügefläche begrenzt sind, an der die Befestigung der Einsätze am Material der Vorsprünge des Grundkörpers erfolgt. Die Einsätze werden mit den Vorsprüngen am Grundkörper durch Löten, insbesondere Hartlöten, verbunden. Jeder Einsatz bildet einen Zahn, der eine Schneide und eine daran anschließende Spanbildungsfläche aufweist. Die Einsätze bestehen aus einem härteren Material, als es dem Material des Grundkörpers entspricht. Die Einsätze sind relativ groß, insbesondere lang, und darüber hinaus auch relativ großvolumig ausgebildet. So besitzen die Einsätze in radialer Richtung des Kreissägeblatts bzw. senkrecht zur Bandlaufrichtung eines Sägebands eine relativ große Erstreckung, so dass sich eine entsprechend der Breite des Sägeblatts relativ große Fügefläche ergibt. Bei den bekannten Einsätzen ist die Fügefläche in L-förmiger bzw. abgewinkelter Gestalt ausgebildet und an den Vorsprüngen vorgebildet, was einerseits sinnvoll ist, um eine möglichst große Fügefläche zu haben. Eine weitere Funktion dieser L-förmigen Fügefläche ist auf die Begünstigung der Positionierung des Einsatzes beim Hartlöten an den Vorsprüngen gerichtet. Diese im Stand der Technik bekannten relativ großen und relativ großvolumigen Einsatzkörper benötigen die beschriebene Gestaltung, um ausreichende Verbindungskräfte und damit Haltekräfte zwischen Einsatzkörper und Vorsprung zu garantieren, wie sie infolge des Hartlötens möglich sind. Diese Haltekräfte müssen entsprechend groß bemessen sein, damit sie beim Einsatz des Sägeblatts den auftretenden Beanspruchungskräften standhalten können. Solche Sägeblätter müssen eine gewisse Einsatzzeit aushalten, ohne dass sich die Einsätze ganz oder teilweise von den Vorsprüngen lösen.

Die Verwendung von relativ großen und großvolumigen Einsätzen mit entsprechend großer Fügefläche ist ganz auf die Verbindung der Einsätze durch Löten abgestimmt. Bei diesem Löten werden die Einsätze entsprechend gehandhabt, relativ zu den Vorsprüngen positioniert, wobei auch das Lötmaterial eingefügt wird. Durch eine örtliche Erwärmung findet der Lötvorgang und damit die Verbindung zwischen Einsatz und Vorsprung entlang der L-förmigen Fügefläche statt.

Nachteilig ist an diesem Stand der Technik der relativ große Materialverbrauch an dem Material der Einsätze. Hartmetall ist bekanntlich teurer als das Grundmaterial eines Sägeblatts. Die Größe und das Volumen der Einsätze kann jedoch infolge ihrer Befestigung durch Löten nicht verringert werden, weil das Lötverfahren eine gewisse Mindestgröße der Fügefläche erfordert, Die Mindestgröße einer gelöteten Fügefläche zwischen Vorsprung und Einsatz darf nicht unterschritten werden, wenn eine hinreichend große Haltekraft erzielt werden soll, um akzeptable übertragbare Kräfte zwischen Zahn und Werkstück beim Sägen ausüben zu können, ohne dass sich aus den Einsätzen gebildete Zähne von den Vorsprüngen lösen und damit die Lebensdauer des Sägeblattes verkürzt wird. Dies gilt auch für die umgekehrte Betrachtungsrichtung.

Hinreichend große übertragbare Kräfte beim Sägen sind durch Löten nur unter Einsatz großer Fügeflächen möglich. Große Fügeflächen können wiederum nur zur Verfügung gestellt werden, wenn relativ große und großvolumige Einsätze Verwendung finden. Solche großen und großvolumigen Einsätze lassen sich zwar leichter handhaben als vergleichsweise kleinere Einsätze. Es ist jedoch nachteilig, dass die die Zähne bildenden Einsätze nicht beliebig nahe relativ zueinander angeordnet werden können. Mit anderen Worten gibt es eine Grenze der Teilung, also des Abstands zwischen benachbarten Zähnen, die nicht unterschritten werden kann. Diese Grenze der Teilung liegt gegenwärtig etwa im Bereich von 9 mm. Diese Grenze kann auch deshalb nicht unterschritten werden, weil dann die Fügefläche wiederum zu klein würde.

Ein weiteres Sägeblatt in Form eines Kreissägeblatts mit einem Grundkörper und an dessen Vorsprüngen befestigten Einsätzen ist aus der EP 1 101 558 B1 oder der DE 699 04 195 T2 bekannt. Diese Druckschrift geht von einem Stand der Technik aus, der ebenfalls relativ lange oder dann auch relativ dicke Einsätze zeigt. Das Volumen dieser Einsätze ist gegenüber dem eingangs genannten Stand der Technik unverändert, so dass auch hier der Verbrauch an vergleichsweise teurem Material zur Ausbildung der Einsätze unverändert hoch ist. Die Einsätze an dem Kreissägeblatt besitzen ausgehend von der Schneide in Richtung auf den Grundkörper eine Vielzahl kompliziert gestalteter und aneinander anschließender, in genauer Relativlage zueinander angeordneter Flächen. Es sind zunächst, d. h. ausgehend von der Schneide in Richtung auf das dem Grundkörper zugekehrte Ende des Einsatzes, zwei im unterschiedlichen Winkel zueinander angeordnete Spanbildungsflächen vorgesehen, an die sich mindestens zwei flächige Spanleitstufen anschließen, die wiederum in unterschiedlichen Winkeln relativ zueinander und zu den Spanbildungsflächen vorgesehen sind. Dadurch bekommt der Einsatz an seiner Frontfläche eine entsprechend komplizierte Gestaltung, so dass er manchmal als Hakenzahn bezeichnet wird. Die Unterbringung der verschiedenen Flächen, nämlich der Spanbildungsflächen einerseits und der Spanleitstufen andererseits, auf der Frontseite des Zahns erfordert weiterhin, dass der Einsatz in radialer Richtung eine entsprechende Länge aufweist, auch wenn diese Länge bereits vergleichsweise kürzer ausgebildet ist, als bei den Einsätzen, wie sie aus der EP 0 266 022 bekannt sind. Andererseits ist aber erkennbar, dass die Einsätze gemäß dem Kreissägeblatt der EP 1 101 558 eine vergrößerte Dicke, also in tangentialer Richtung, aufweisen. Diese Gestaltung zielt darauf ab, auch hier eine hinreichend große Fügefläche zur Verfügung zu stellen, wie sie durch das angewendete Fügeverfahren des Hartlötens für einen hinreichend festen Sitz der Einsätze an den Vorsprüngen erforderlich ist. Die vergleichsweise vergrößerte Dicke der Einsätze wirkt sich nicht nur in einem unverändert hohen Verbrauch an Einsatzmaterial nachteilig aus, sondern zusätzlich noch nachteilig im Hinblick auf die erzielbaren Teilungen. Durch die vergrößerte Dicke der Einsätze, also in tangentialer Richtung, wird die Grenze für ausführbare kleine Teilungen noch vergleichsweise höher. Dies bedeutet, dass ein solches Kreissägeblatt nur mit einer vergleichsweise großen Teilung hergestellt werden kann. Eine große Teilung ist nachteilig hinsichtlich der auftretenden Kräfte beim Einsatz des Sägeblatts. Sägeflächen mit hoher Oberflächengüte können nur durch relativ kleine Teilungen erzeugt werden. Weiterhin ist die aufwendige Geometrie an der Frontseite der Einsätze nachteilig, denn diese erfordert einen hohen Schleifaufwand zu ihrer Herstellung.

Aus der PCT-Anmeldung mit der Veröffentlichungsnummer WO 01119578 A1 ist ein Sägeblatt bekannt, welches die Form eines Sägebands oder auch eines Kreissägeblatts haben kann. Das Sägeblatt besitzt einen Grundkörper, auf den Segmente in Form von Blättchen aufgeschweißt sind, die dem Grundkörper mindestens teilweise umfassen. Die Segmente besitzen keine Schneiden, sondern wirken eher schleifend, weil sie Diamanten oder andere abrasive Werkstoffe enthalten. Die gesinterten Segmente können verschiedene Gestalt aufweisen, so beispielsweise die Form eines Rechtecks, eines Quaders, eines Trapezes, eines Dreiecks oder dergleichen. Da die Segmente den Grundkörper umfassen müssen, ist auf diese Art und Weise die Fügezone vergrößert. Trotz des empfohlenen Induktivschweißverfahrens werden damit Teilungen möglich, die in der Größenordnung von 8 mm liegen.

Aus der DE 20 2005 006 613 U1 ist ein Kreissägeblatt bekannt, welches Zähne besitzt, die von Einsätzen aus Hartmetall mit Schneiden gebildet sind. Das Kreissägeblatt weist variable Teilung auf. Zur Begünstigung der Spanabfuhr sind im Bereich des Materials des Grundkörpers des Kreissägeblatts Spanbrecher ausgebildet und angeordnet, die wahlweise im Bereich der Zahnbrust, des Zahnrückens oder aber auch als separate Räumerzähne ausgebildet sein können. Diese Spanbrecher dienen dem Entfernen von bereits gebildeten und vom Werkstück gelösten Spänen aus dem Schnittspalt. Sie haben keinen Einfluss auf die Gestaltbildung der Späne während ihrer Entstehung und Abnahme vom Werkstück, so dass Spanbrecher mit Spanbildungsflächen nicht vergleichbar sind.

Aus der DE 103 93 472 T5 ist ein Sägeblatt mit einem Grundkörper und einer Folge von Zähnen mit Schneiden bekannt. Jede Folge besteht aus mindestens einem geraden Zahn und mehreren geschränkt angeordneten Zähnen. Jeder Zahn wird von einem Einsatzkörper gebildet, der in eine Tasche in dem Grundkörper des Sägeblatts eingesetzt wird. Der Einsatzkörper besitzt vorzugsweise Trapezform oder Schwalbenschwanzform. Die Befestigung der Einsatzkörper in Form von Plättchen erfolgt durch Schweißen. Der Einsatzkörper besteht aus vergleichsweise härterem Material als der Grundkörper. Bei den eingesetzten Plättchen oder Einsatzkörpern handelt es sich um relativ großvolumige Materialstücke, so dass auch die Fügezone eine entsprechend große Länge aufweist. Die Höhe der Einsatzkörper entspricht etwa der halben Zahnhöhe. Die Anordnung einer Spanbildungsfläche und/oder einer Spanleitstufe werden in dieser Druckschrift nicht thematisiert oder angeregt.

Aus der US 3,730,038 ist ein Kreissägeblatt mit einem Grundkörper und Zähnen mit Schneiden gemäß dem Oberbegriff von Anspruch 1 bekannt. Der Grundkörper weist pro Zahn einen Vorsprung mit einer Nut auf, die einen als Zahn fungierenden Einsatz auf drei Seiten seines Fußes umschließt. Die Einsätze sind im Vergleich zu den Vorsprüngen relativ groß und großvolumig gestaltet. Der Einsatz wird auf jede bekannte Art, z. B. durch Hartlöten, Weichlöten oder dergleichen in der Nut festgesetzt. Auf diese Weise wird einem Aushebeln der Einsätze bei auf die Zahnspitze einwirkenden Kräften entgegengewirkt. Jeder Einsatz besitzt einen vorderen Flächenbereich sowie drei weitere Flächenbereiche. Am Vorsprung ist eine Schulter ausgebildet, die zu dem vorderen Flächenbereich rechtwinklig angeordnet ist, so dass damit ein Spanbrecher gebildet wird, der den Abfluss der Späne während des Einsatzes des Kreissägeblattes begünstigt. Das bekannte Sägeblatt zielt weder auf die Verwirklichungsmöglichkeit kleiner Teilungen, noch die Verwendung kleiner und kleinvolumiger Einsätze ab.

Die EP 1 205 274 A1 zeigt und beschreibt ein Sägeband mit einem Grundkörper und Zähnen mit Schneiden. Der Grundkörper besitzt Vorsprünge, an denen Formkörper aus hartem Schneidstoff durch Schweißen oder Löten befestigt sind. Der Querschnitt des Formkörpers ist in der Haupterstreckungsebene des Sägebandes auf der dem Sitz zugekehrten Seite von einer Kreisbogenlinie und auf der dem Sitz abgekehrten Seite von einer Frontlinie einer Fläche begrenzt. Es werden keine Angaben über eine Spanbildungsfläche und/oder eine Spanleitstufe gemacht.

### AUFGABE DER ERFINDUNG

Der Erfindung liegt die Aufgabe zugrunde, ein Sägeblatt der eingangs beschriebenen Art, insbesondere ein Kreissägeblatt, bereitzustellen, bei dem das Sägeblatt auch mit kleineren

Teilungen herstellbar ist, als dies bisher bei Kreissägeblättern mit gelöteten Einsätzen möglich ist. Die angestrebte verkleinerte Teilung zielt darauf ab, eine vergleichsweise verbesserte Oberflächengüte im Schnittkanal, also an dem Werkstück, zu erzeugen.

### LÖSUNG

Die Aufgabe der Erfindung wird erfindungsgemäß mit den Merkmalen des unabhängigen Patentanspruchs 1 gelöst.

### BESCHREIBUNG DER ERFINDUNG

Die Befestigung jedes Einsatzes an seinem Vorsprung des Grundkörpers erfolgt nicht mehr durch Löten, sondern durch Verschweißen, insbesondere durch Widerstandsschweißen. In Verbindung damit werden ein oder mehrere Spanleitstufen vom Einsatz weggenommen und auf den Vorsprung des Grundkörpers transferiert. Der Einsatz trägt nur noch eine oder mehrere Spanbildungsflächen und kann insoweit vorteilhaft wesentlich kleiner ausgebildet werden. Eine oder mehrere Spanleitstufen werden an dem Vorsprung realisiert. Dies bedeutet, dass der Einsatz selbst sowie die Fügefläche entlastet werden. Unter einer Spanbildungsfläche wird eine Fläche verstanden, unter deren Einfluss und Mitwirkung der Span vom Werkstück abgenommen und geformt, also gebildet, wird. Unter einer Spanleitstufe wird eine Formgebung am Vorsprung verstanden, mit deren Hilfe ein bereits gebildeter Span abgeleitet, also umgeformt und/oder hinweggeführt, wird. Der durch den Einsatz gebildete Zahn wird nur noch durch die bei der Spanabnahme und Spanbildung zu erbringenden Kräfte belastet. Die durch die Spanleitstufe zu erbringenden Kräfte werden von dem Vorsprung aufgenommen und belasten den Zahn nicht mehr.

Die beiden kennzeichnenden Merkmale, nämlich die Schweißverbindung und die Anordnung der Spanleitstufe am Vorsprung, wirken in besonderer Weise zusammen. Die Befestigungsart des Verschweißens des Einsatzes anstatt des Lötens ermöglicht die Aufbringung höherer Haltekräfte zwischen Einsatz und Vorsprung. Damit wird es in einer ersten Stufe möglich, den Einsatz kleiner zu wählen, weil auch kleinere Fügeflächen zur Bereitstellung der erforderlichen Haltekräfte ausreichen. Zusätzlich wird der Einsatz von einer Spanleitstufe entlastet. Damit ist es in einer zweiten Stufe zusätzlich möglich, die Größe der Fügefläche noch einmal zu verkleinern. Diese beiden Maßnahmen führen also dazu, den Einsatz selbst kleiner, auch volumenkleiner, als im Stand der Technik zu gestalten. Dies geht einher mit der Verlagerung der Spanleitstufen von der Frontseite des Einsatzes zur Frontseite des Vorsprungs am Grundkörper. Es wird also trotz verkleinerter Fügefläche ein sicherer Sitz des Einsatzes am Vorsprung erreicht, verbunden mit der Möglichkeit, hohe Kräfte über den Einsatz auf das zu zerspanende Material auszuüben. Da der Einsatz also grundsätzlich kleiner gestaltet werden kann als im Stand der Technik, ergibt sich die Möglichkeit, auch kleinere Teilungen zu verwirklichen. Teilungen von 9 mm im Stand der Technik werden gemäß der Erfindung auf bis oder unter 6 mm abgesenkt. Das Verschweißen zwischen Einsatz und Vorsprung des Grundkörpers erbringt gleichzeitig noch weitere Vorteile. Beim Verschweißen findet ein Verschmelzen der Materialien statt, wodurch größere Toleranzen in der Fügezone gegenüber dem Löten hinnehmbar sind. Weiterhin wird die Temperaturbeständigkeit des geschweißten Einsatzes verbessert, insbesondere die Warmfestigkeit. Während gelötete Einsätze in einem Temperaturbereich von etwa 600 °C bis 1.000 °C ihren Halt am Vorsprung verlieren können, liegt bei geschweißten Einsätzen diese Grenze erheblich höher, etwa in der Größenordnung von 1.600 °C. Der Vorgang des Schweißens ist aber auch grundsätzlich vorteilhafter als die Befestigung durch Löten. Beim Schweißen erfolgt ein geringerer Wärmeeintrag in den Grundkörper, so dass sich der Grundkörper auch vergleichsweise weniger verzieht. Der Richtaufwand an solchen Kreissägeblättern oder Sägebändern, bei denen die Einsätze aufgeschweißt sind, ist kleiner als bei entsprechenden Sägeblättern mit aufgelöteten Einsätzen. Weiterhin tritt durch die relativ kleineren Einsätze auch eine entsprechende Einsparung an vergleichsweise teurerem Material ein. Von dem vergleichsweise teuren Einsatzmaterial muss weniger weggeschliffen werden. Die Einsätze können durch Verwendung einer an die endgültige Form des Zahn angepasste Gestaltung vorteilhaft auch so klein gestaltet werden, dass nach dem Verschweißen mit dem Vorsprung des Grundkörpers nur noch geringe Schleifarbeiten durchzuführen sind, um die gewünschte endgültige Form des Zahns zu erreichen.

Die dem Vorsprung zugekehrte letzte Spanbildungsfläche am Einsatz kann an die erste am Vorsprung des Grundkörpers angeordnete Spanleitstufe übergehen. Der Übergang sollte vorzugsweise stetig erfolgen, es sei denn, dass eine besondere Wirkung, z.B. ein Spanbruch, angestrebt wird

Zwischen Vorsprung und Einsatz ist nur eine Fügefläche vorgesehen. Diese eine Fügefläche ist vergleichsweise kurz und auch klein gestaltet, insbesondere bei Dünnschnittkreissägeblättern. Die eine Fügefläche lässt verschiedene Formgebung zu. Sie kann als ebene, gewellt oder gekrümmt verlaufende Fläche ausgebildet sein.

Die flächige Spanleitstufe am Vorsprung des Grundkörpers kann gehärtet sein. Damit wird dem Verschleiß am Grundkörper entgegengewirkt und die Lebensdauer bzw. Einsatzzeit des Sägeblattes gesteigert. Am Vorsprung des Grundkörpers können auch mehrere Spanleitstufen vorgesehen sein, die in unterschiedlichen Winkeln zueinander angeordnet sind.

Der Einsatz kann breiter als der Vorsprung des Grundkörpers ausgebildet sein und eine Nut aufweisen, mit der er beim Schweißen den Vorsprung seitlich umfassend aufsetzbar ist. Der Einsatz ist also breiter als der Vorsprung und damit der Grundkörper. Diese Gestaltung vergrößert zwar das eingesetzte Volumen des Einsatzes, erbringt aber andererseits Vorteile beim Handhaben und Aufsetzen des Einsatzes auf den Vorsprung während des Schweißvorgangs.

Für die Gestaltung des Einsatzes gibt es verschiedene Möglichkeiten. So kann der Einsatz aus einem Materialstück in Form einer Kugel, eines Zylinders, eines Segmentes oder eines anderen Formstücks bestehen. Durch diese Gestaltung lassen sich die Einsätze preiswert herstellen.

Die Spanleitstufe kann durch eine in Bandlaufrichtung vorspringende Auswölbung am Vorsprung gebildet sein. Die Auswölbung kann durch einen Streckenzug, aber auch gekrümmt begrenzt sein. Auf diese Weise können auch mehrere Spanleitstufen hintereinander realisiert sein. So kann die Spanleitstufe durch eine in Bandlaufrichtung vorspringende Auswölbung am Vorsprung mit einer Vielzahl ineinander übergehender Flächen gebildet sein.

Vorteilhafte Weiterbildungen der Erfindung ergeben sich aus den Patentansprüchen, der Beschreibung und den Zeichnungen. Die in der Beschreibungseinleitung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: zeigt eine Seitenansicht eines Zahns an einem Sägeblatt nach dem Stand der Technik.
- **Fig. 2**: zeigt eine Seitenansicht eines Zahns an einem erfindungsgemäßen Sägeblatt.
- **Fig. 3**: zeigt eine Seitenansicht eines Zahns mit abweichend gestalteter Fügefläche.
- **Fig. 4**: zeigt eine Seitenansicht eines Zahns mit abweichend gestalteter Fügefläche.
- **Fig. 5**: zeigt eine Seitenansicht eines Zahns mit abweichend gestalteter Fügefläche.
- **Fig.6**: zeigt eine Seitenansicht eines Vorsprungs am Grundkörper vor dem Verschweißen mit dem Einsatz.
- **Fig. 7**: zeigt einen Ausschnitt eines Kreissägeblattes mit variabler Teilung.

### FIGURENBESCHREIBUNG

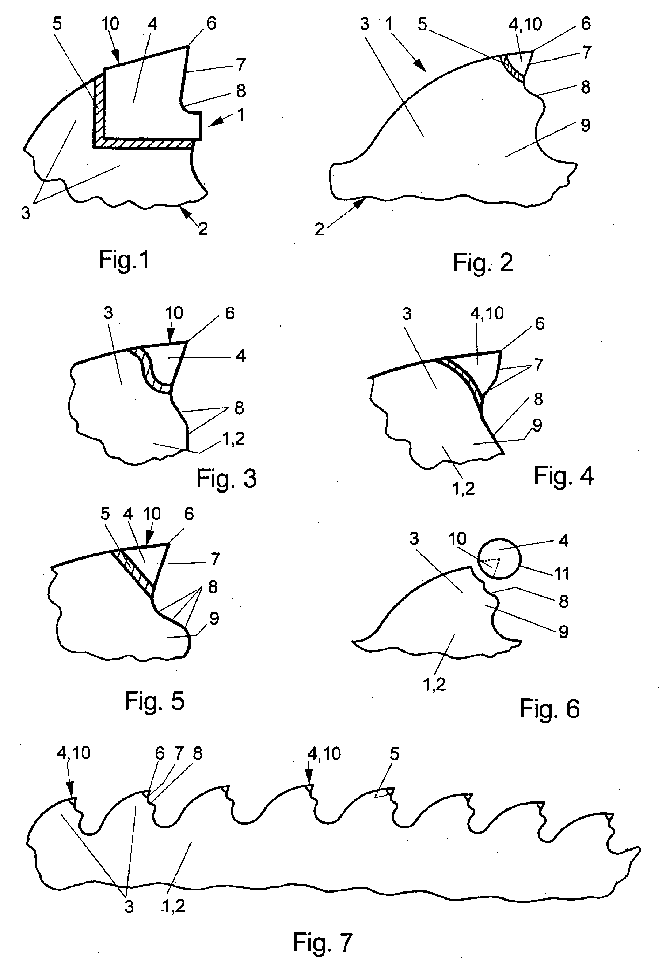

**Fig. 1** zeigt einen Ausschnitt aus einem Sägeblatt 1 nach dem Stand der Technik. Das Sägeblatt 1 weist einen Grundkörper 2 auf, von dem nur ein Ausschnitt sichtbar ist. Es ist nur der Teil für einen einzelnen Zahn dargestellt. Der Grundkörper besitzt an der Stelle des Zahns einen Vorsprung 3, an dem ein Einsatz 4 befestigt ist. Der Vorsprung 3 ist durch eine L-förmige Gestaltung in Abstimmung auf den Einsatz 4 begrenzt. Auf diese Weise wird zwischen Vorsprung 3 und Einsatz 4 eine L-förmig gestaltete Fügezone bzw. Fügefläche 5 geschaffen, in der sich im Stand der Technik ein Lot befindet, da dort der Einsatz 4 mit dem Vorsprung 3 durch einen Lötvorgang verbunden wird. Die Fügefläche 5 kann je nach Ausbildung und Gestaltung des Lots unterschiedliche Dicke aufweisen. Die Ausbildung und Anordnung der Fügezone 5 in L-Form zielt darauf ab, eine möglichst groß gestaltete Fügefläche 5 zu schaffen, damit ausreichend hohe Haftkräfte zwischen Einsatz 4 und Vorsprung 3 erzielbar sind, die der Beanspruchung des Sägeblattes 1 während des Sägens standhalten. Der Einsatz 4 bildet den Zahn 10. Der Zahn 10 weist eine Schneide 6, an der Zahnbrust eine sich anschließende Spanbildungsfläche 7 und weiter daran anschließend eine Spanleitstufe 8 auf. Solche Zähne 5 werden oft auch als Hakenzähne bezeichnet. Es versteht sich, dass am Grundkörper 2 in der entsprechenden Teilung hintereinander eine Vielzahl von Vorsprüngen 3 vorgesehen sind, in die jeweils Zähne 5 bildende Einsätze 4 eingelötet sind. Fig. 1 zeigt den fertigen Zustand des Grundkörpers mit dem eingelöteten Einsatz 4, also die endgültige Formgebung. Es ist erkennbar, dass der Einsatz 4 sowohl in radialer Richtung als auch in tangentialer Richtung relativ groß gestaltet ist. Diese relativ große Gestaltung ist in radialer Richtung erforderlich, um die Schneide 6, die sich anschließende Spanbildungsfläche 7 und die Spanleitstufe 8 unterzubringen. Wenn mehrere Spanleitstufen 8 hintereinander vorgesehen sind, müssen Einsätze 4 Verwendung finden, die in radialer Richtung noch länger gestaltet sind. Aber auch in tangentialer Richtung ist der Einsatz 4 relativ groß gestaltet. Dies wird in erster Linie durch die L-förmige Fügefläche 5 und die insgesamt benötigte Größe dieser Fügefläche 5 verursacht. Bei Dünnschnittkreissägeblättern ist die Dicke des Grundkörpers 2 und damit auch des Vorsprungs 3 ohnehin begrenzt, so dass in dieser Richtung senkrecht zur Zeichenebene der Fig. 1 die Fügefläche 5 ohnehin begrenzt ist.

**Fig. 2** zeigt eine ähnliche Darstellung wie Fig. 1, jedoch bei einem Ausschnitt aus einem erfindungsgemäßen Sägeblatt 1. Fig. 2 ist im Vergleich zu Fig. 1 zu sehen. Es fällt auf, dass der den Zahn 10 bildende Einsatz 4 erheblich kleiner gestaltet ist. Dies betrifft nicht nur die Länge der Fügefläche 5, sondern auch das Volumen des Einsatzes 4. Der Einsatz 4 ist über die Fügefläche 5 mit dem Vorsprung 3 am Grundkörper 1 verschweißt. Durch eine solche Schweißverbindung entstehen größere Haftungskräfte zwischen Einsatz 4 und Vorsprung 3, als dies durch eine Lötverbindung nach dem Stand der Technik möglich ist. Die Fügeflächen bzw. Fügezonen 5 in den Figuren sind übertrieben dick dargestellt. Beim Stand der Technik gemäß Fig. 1 zeigt die Fügefläche 5 die Anordnung des Lots. Bei der erfindungsgemäßen Ausbildung gemäß Fig. 2 zeigt die Fügefläche 5 einen Bereich, in welchem die Materialien des Grundkörpers 2 und des Einsatzes 4 während des Schweißvorgangs ineinandergeflossen sind. Es versteht sich, dass für den Einsatz 4 ein höherwertigeres Material, insbesondere ein Hartmetall, Verwendung findet, während das Material des Grundkörpers 2 und damit des Vorsprungs 3 vergleichsweise weniger hart und damit duktiler ist.

Weiterhin fällt bei einem Vergleich zwischen den Fig. 1 und 2 auf, dass sich die Spanleitstufe 8 nunmehr erfindungsgemäß nicht mehr am Einsatz 4, sondern am Vorsprung 3 befindet. Am Einsatz 4 selbst ist nur noch eine oder mehrere Spanbildungsflächen 7 verwirklicht. Der Übergang zwischen der Spanbildungsfläche 7 und der Spanleitstufe 8 ist stetig ausgeführt, um einen kontinuierlichen Übergang zu erzeugen. Die Spanleitstufe 8 wird von einer in Bandlaufrichtung vorspringenden Aufwölbung 9 gebildet. Die Aufwölbung 9 kann aber auch eine andere Formgebung aufweisen. Die **Fig. 3 bis 5** zeigen ähnliche Darstellungen wie Fig. 2, jedoch unterschiedlich geformte Fügeflächen 5, unterschiedlich gestaltete Spanbildungsflächen 7 und Spanleitstufen 8. Hieraus ist erkennbar, dass die Fügefläche 5 konvex gekrümmt, gewellt, konkav gekrümmt oder auch gerade ausgebildet sein kann. Die Spanbildungsflächen 7 sind in der Regel als ebene Flächen ausgebildet.

**Fig. 6** verdeutlicht die Verhältnisse vor dem Verschweißen. Der Grundkörper 2 des Sägeblattes 1 wird in bekannter Weise produziert, wobei die Umrisskontur des Vorsprungs 3 erstellt wird. Der Einsatz 4 ist hier als Zylinder 11 dargestellt. Es kann sich aber auch um eine Kugel oder ein sonstiges Formstück handeln. In gestrichelter Linienführung ist das Materialstück verdeutlicht, welches letztendlich als Zahn 10 nach dem Schweißen und Schleifen übrig bleibt. Die Spanleitstufe 8 ist bereits am Vorsprung durch Fräsen gebildet. Der Einsatz 4 kann eine größere Breite, als es der Breite des Grundkörpers 2 entspricht, aufweisen. Damit steht auch der letztendlich gebildete Zahn 10 beidseitig über die Dicke des Grundkörpers 2 über. Zum erleichterten Aufsetzen kann ein Einsatz 4 als Formstück ausgebildet auch eine Nut (nicht dargestellt) besitzen, mit der er beim Schweißen den Vorsprung 3 umfassend aufsetzbar ist. Damit lässt sich der Einsatz 4 nicht nur leichter handhaben, sondern die durch den Schweißvorgang erzeugte Fügefläche 5 kann sich auch etwas seitlich an dem Vorsprung 3 fortsetzen.

**Fig. 7** zeigt einen Ausschnitt aus einem Sägeblatt 1, welches als Kreissägeblatt ausgebildet ist. Es ist eine Reihe von Zähnen 10 dargestellt, die in unterschiedlichem Abstand zueinander angeordnet sind, so dass das Sägeblatt 1 variable Teilung aufweist. Aus dieser Darstellung ist auch leicht erkennbar, wie klein letztendlich die die Zähne 10 bildenden Einsätze 4 sind. Dies bezieht sich sowohl auf den Zustand der Einsätze 4 vor dem Schleifvorgang (Fig. 6) wie auch nach dem Schleifvorgang (Fig. 7).

### BEZUGSZEICHENLISTE

- 1: Sägeblatt
- 2: Grundkörper
- 3: Vorsprung
- 4: Einsatz
- 5: Fügefläche
- 6: Schneide
- 7: Spanbildungsfläche
- 8: Spanleitstufe
- 9: Aufwölbung
- 10: Zahn
- 11: Zylinder

## Patentansprüche

1. Sägeblatt (1) mit einem Grundkörper (2) und Zähnen (10) mit Schneiden (6), wobei
der Grundkörper (2) pro Zahn (10) je einen Vorsprung (3) mit einer Fügefläche (5) aufweist, an der ein den Zahn (10) mit seiner Schneide (6) und mindestens einer an die Schneide (6) anschließenden Spanbildungsfläche (7) bildender Einsatz (4) aus vergleichsweise härterem Material befestigt ist, und
der Vorsprung (3) am Grundkörper (2) mindestens eine flächige Spanleitstufe (8) aufweist, **dadurch gekennzeichnet, dass**
der die Spanbildungsfläche (7) tragende Einsatz (4) an der Fügefläche (5) mit dem Vorsprung (3) am Grundkörper (2) verschweißt ist, und
das Sägeblatt (1) eine Teilung von 6 mm oder weniger besitzt.

2. Sägeblatt (1) nach Anspruch 1, **dadurch gekennzeichnet, dass** die dem Vorsprung (3) zugekehrte letzte Spanbildungsfläche (7) am Einsatz (4) an die erste am Vorsprung (3) des Grundkörpers (2) angeordnete Spanleitstufe (8) übergeht.

3. Sägeblatt (1) nach Anspruch 1, **dadurch gekennzeichnet, dass** zwischen Vorsprung (3) und Einsatz (4) nur eine Fügefläche (5) vorgesehen ist.

4. Sägeblatt (1) nach Anspruch 3, **dadurch gekennzeichnet, dass** die eine Fügefläche (5) als ebene, gewellt oder gekrümmt verlaufende Fläche ausgebildet ist.

5. Sägeblatt (1) nach einem der Ansprüche 1 bis 4, **dadurch gekennzeichnet, dass** die flächige Spanleitstufe (8) am Vorsprung (3) des Grundkörpers (2) gehärtet ist.

6. Sägeblatt (1) nach einem der Ansprüche 1 bis 5, **dadurch gekennzeichnet, dass** am Vorsprung (3) des Grundkörpers (2) mehrere Spanleitstufen (8) vorgesehen sind, die in unterschiedlichen Winkeln zueinander angeordnet sind.

7. Sägeblatt (1) nach einem der Ansprüche 1 bis 6, **dadurch gekennzeichnet, dass** der Einsatz (4) breiter als der Vorsprung (3) des Grundkörpers (2) ausgebildet ist und eine Nut aufweist, mit der er beim Schweißen den Vorsprung (3) umfassend aufsetzbar ist.

8. Sägeblatt (1) nach einem der Ansprüche 1 bis 7, **dadurch gekennzeichnet, dass** der Einsatz (4) aus einem Materialstück in Form einer Kugel, eines Zylinders (11), eines Segmentes oder dergleichen besteht.

9. Sägeblatt (1) nach einem der Ansprüche 1 bis 8, **dadurch gekennzeichnet, dass** die Spanleitstufe (8) durch eine in Bandlaufrichtung vorspringende Auswölbung (9) am Vorsprung (3) gebildet ist.

10. Sägeblatt (1) nach einem der Ansprüche 1 bis 9, **dadurch gekennzeichnet, dass** die Spanleitstufe (8) durch eine in Bandlaufrichtung vorspringende Auswölbung (9) am Vorsprung (3) mit einer Vielzahl ineinander übergehender Flächen gebildet ist.

## Claims

1. A saw blade (1) including a base body (2) and teeth (10) including cutting portions (6), wherein
the base body (2) for each tooth (10) includes a protrusion (3) having a connecting surface (5) being fixedly connected to an insert (4) being made of a comparatively harder material, the insert (4) forming the tooth (10) with its cutting portion (6) and at least one chip producing surface ((7) being located next to the cutting portion (6), and
the protrusion (3) at the base body (2) includes at least one plane chip guiding step ("chip breaker") (8), **characterised in that**
the connecting surface (5) of the insert (4) including the chip producing surface (7) is welded to the protrusion (3) located at the base body (2), and
the saw blade (1) has a division of 6 mm or less.

2. The saw blade (1) of claim 1, **characterised in that** the last chip producing surface (7) at the insert (4) facing the protrusion (3) merges into the first chip guiding step ("chip breaker") (8) being located at the protrusion (3) of the base body (2).

3. The saw blade (1) of claim 1, **characterised in that** only one connecting surface (5) is provided between the protrusion (3) and the insert (4).

4. The saw blade (1) of claim 3, **characterised in that** the one connecting surface (5) is designed as a plane, waved or bent surface.

5. The saw blade (1) of at least one of claims 1 to 4, **characterised in that** the plane chip guiding step ("chip breaker") (8) located at the protrusion (3) of the base body (2) is hardened.

6. The saw blade (1) of at least one of claims 1 to 5, **characterised in that** a plurality of chip guiding steps ("chip breakers") (8) are provided at the protrusion (3) of the base body (2), the chip guiding steps ("chip breakers") (8) being arranged at different angles with respect to one another.

7. The saw blade (1) of at least one of claims 1 to 6, **characterised in that** the insert (4) is wider than the protrusion (3) of the base body (2) and includes a channel with which it can be placed on the protrusion (3) during welding.

8. The saw blade (1) of at least one of claims 1 to 7, **characterised in that** the insert (4) is made of a piece of material having the shape of a ball, a cylinder (11), a segment and the like.

9. The saw blade (1) of at least one of claims 1 to 8, **characterised in that** the chip guiding step ("chip breaker") (8) is formed by a curvature (9) located at the protrusion (3), the curvature (9) extending in the moving direction of the saw blade (1).

10. The saw blade (1) of at least one of claims 1 to 9, **characterised in that** the chip guiding step ("chip breaker") (8) is formed by a curvature (9) located at the protrusion (3), the curvature (9) extending in the moving direction of the saw blade (1) and including a multitude of surfaces merging into one another.

## Revendications

1. Lame de scie (1), comprenant un corps de base (2) et des dents (10) avec des arêtes de coupe (6), dans laquelle
le corps de base (2) présente pour chaque dent (10) respectivement une saillie (3) avec une face de joint (5) à laquelle est fixé un insert (4) d'un matériau relativement plus dur et formant la dent (10) avec son arête de coupe (6) et au moins une surface de formation de copeaux (7) adjacente à l'arête de coupe (6), et
la saillie (3) sur le corps de base (2) présente au moins un brise-copeaux (8) plan,
**caractérisée en ce que** l'insert (4) supportant la surface de formation de copeaux (7) est soudé au niveau de la face de joint (5) avec la saillie (3) sur le corps de base (2), et
la lame de scie (1) possède un pas de 6 mm ou moins.

2. Lame de scie (1) selon la revendication 1, **caractérisée en ce que** la dernière face de formation de copeaux (7) tournée vers la saillie (3) passe au niveau de l'insert (4) au premier brise-copeaux (8) disposé sur la saillie (3) du corps de base (2).

3. Lame de scie (1) selon la revendication 1, **caractérisée en ce qu'**entre la saillie (3) et l'insert (4), une seule face de joint (5) est prévue.

4. Lame de scie (1) selon la revendication 3, **caractérisée en ce que** ladite une face de joint (5) est réalisée comme une surface plane, s'étendant de façon ondulée ou courbe.

5. Lame de scie (1) selon l'une quelconque des revendications 1 à 4, **caractérisée en ce que** le brise-copeaux (8) plan est durci au niveau de la saillie (3) du corps de base (2).

6. Lame de scie (1) selon l'une quelconque des revendications 1 à 5, **caractérisée en ce que** sur la saillie (3) du corps de base (2) plusieurs brise-copeaux (8) sont prévus qui sont disposés sous différents angles les uns par rapport aux autres.

7. Lame de scie (1) selon l'une quelconque des revendications 1 à 6, **caractérisée en ce que** l'insert (4) est réalisé pour être plus large que la saillie (3) du corps de base (2) et présente une rainure qui permet sa mise en place lors du soudage en entourant la saillie (3).

8. Lame de scie (1) selon l'une quelconque des revendications 1 à 7, **caractérisée en ce que** l'insert (4) est composé d'un morceau de matière sous forme de sphère, de cylindre (11), de segment ou similaires.

9. Lame de scie (1) selon l'une quelconque des revendications 1 à 8, **caractérisée en ce que** le brise-copeaux (8) est formé sur la saillie (3) par une protubérance (9) saillante dans le sens de déroulement de la bande.

10. Lame de scie (1) selon l'une quelconque des revendications 1 à 9, **caractérisée en ce que** le brise-copeaux (8) est formé sur la saillie (3) par une protubérance (9) saillante dans le sens de déroulement de la bande, avec une pluralité de surfaces passant les unes dans les autres.
